# EUROPEAN PATENT APPLICATION

(11) **EP 4 722 951 A1**
(43) Date of publication of application: **08.04.2026**
(21) Application number: 24306617.2
(22) Date of filing: 02.10.2024
(51) Int. Cl.: G06F 21/32, H04L 9/32, H04L 9/40

(54) **METHOD FOR A DELEGATOR TO DELEGATE AN IN-PERSON SERVICE REMOTELY TO A DELEGATEE**

(71) Applicant: THALES DIS FRANCE SAS, 92190 Meudon (FR)
(72) Inventor: DEBOIS, Georges, 75013 Paris (FR); DJOUDI, Adel, 92160 Antony (FR); PAIXAO, Marcos, 92130 Issy-les-Moulineaux (FR); BARDON, Quentin, 94300 Vincennes (FR)
(74) Representative: Quintero Romero, Manuel

(57) **Abstract**

The invention provides a method for a delegator to delegate an in-person service remotely to a delegatee, wherein the method comprises the steps of:
- the delegator nominates the delegatee and prepares a message comprising at least a delegatee unique identifier, and a delegatee biometrics data;
- the delegator authenticates to a third party entity and sends the message;
- an onsite verifier
∘ retrieves the delegatee unique identifier and the delegatee portrait from the third party entity,
∘ verifies the delegatee unique identifier provided in-person by the delegatee, captures a delegatee biometrics data, and performs a biometrics matching with the provided delegatee biometrics data;

- if verification is successful, onsite verifier grants the delegatee to perform the in-person service.

## Description

### TECHNICAL FIELD

This invention pertains to the field of digital delegation and, in particular, to allow at a distance the delegation of an in-person service.

In further embodiments, the invention allows nominating (not necessarily enrolled) delegatees that are available to perform an in-person service on behalf of a registered delegator.

### BACKGROUND OF THE INVENTION

When a person cannot perform a scheduled transaction by him/herself e.g., because is not timely or geographically available, he/she can always entrust or assign (i.e., delegate) the task to another person who will act (i.e., perform the transaction) on his/her behalf. For this, a mandate, authorisation, proxy or power of attorney is generally needed.

Traditionally, especially in legal scenarios, this delegation is produced by filling in and (e.g., handwritten or digitally) signing a document by the mandator that evidences the conditions of the delegation in favour of another person (i.e., mandatory). Frequently, this documented mandate allows an identifiable mandatory to represent the mandator during the entrusted tasks with the (i.e., temporary or permanent) transferred abilities.

Throughout this document, the person(s) who transfers his/her abilities will be named mandator or delegator; while the person(s) receiving the mandate or proxy is to be named mandatory or delegatee.

Examples of delegated transactions can be, inter alia: delegatee performs financial transactions (e.g., money withdraw) from delegator's bank account, delegatee performs tasks (e.g., pick up children from school) as delegator's children guardian; delegatee performs Government-related transactions (e.g., visa application or voting) at official offices (e.g., ambassy or voting venue) on behalf of delegator; or delegatee performs postal transactions (e.g., parcel collection) at post offices (or with postman at home) on behalf of delegator.

The emergence of the digital era has brought user-convenience to old-fashioned physical mandates and authorisations and, now, in some countries - especially those with electronic ID documents (elD cards) -, it is permitted to digitally sign a digital version of the mandate providing the same legal status as the physical one. Further, notaries can nowadays prepare power of attorneys via video-conference, a well-suited advantage towards mobility-restricted scenarios (e.g., disable people, interregional transactions, last-minute situations).

In this regard, specific service providers working on less-sensitive use cases - such as delivery services - have started providing non-interoperable proprietary solutions to produce, store, and verify these mandates. Similarly, decentralized ecosystems such as W3C's Verifiable Credentials or blockchain's smart contracts have been proposing advanced fully-digital delegation of credentials among subjects which obliges everyone to be enrolled in the ecosystem, thereby posing some adoption issues.

Therefore, there is still a need in the industry for a user-friendly manner of securing in-person transactions between a service provider and a delegatee on behalf of remotely located delegator.

### SUMMARY OF THE INVENTION

The present invention provides a solution for the aforementioned problems by a method for a delegator to delegate an in-person service remotely to a delegatee according to claim 1, an infrastructure according to claim 12, and a system according to claim 14. In dependent claims, preferred embodiments of the invention are defined.

In a first inventive aspect, the invention provides a method for a delegator to delegate an in-person service remotely to a delegatee, wherein the method comprises the steps of:
- the delegator nominates the delegatee and prepares a message comprising at least a delegatee unique identifier, and a delegatee biometrics data;
- the delegator authenticates to a third party entity and sends the message to third party;
- an onsite verifier
   ∘ retrieves the delegatee unique identifier and the delegatee biometrics data from the third party entity,
   ∘ verifies the delegatee unique identifier provided in-person by the delegatee, captures a biometrics data picture, and performs a biometrics matching with the provided delegatee biometrics data;
- if verification is successful, onsite verifier grants the delegatee to perform the in-person service.

That is, the delegator according to the invention cannot (or simply doesn't want to) perform him/herself an in-person service and, then, decides to nominate someone else to do it on his/her behalf. The delegator then chooses to whom he/she wants to transfer these abilities and gets personal information about this nominated delegatee (i.e., unique identifier and biometrics data). The delegator informs a third party entity about the delegatee performing the transaction in his/her behalf. This third party entity may be either the service provider involved in the in-person service or a delegation service providing delegation solutions in a closed ecosystem.

An enrolled verifier will be able to retrieve the personal information about the delegatee from the third party entity. This information can be either pushed by the third party entity e.g., right after the delegator request the delegation (i.e., delegator should contextualize the in-person service for the third party to narrow down the suitable verifiers) or, when the delegatee shows up, an enrolled verifier will trigger the session with the third party entity and pull the personal information about the delegatee. In a particular embodiment, in peer to peer communications, decentralized ecosystems, or when the delegator knows the verifier (i.e., is able to uniquely identify and authenticate to the exact verifier), the third party entity and the onsite verifier are the same entity, so that the delegator directly forwards the delegatee's personal information to the onsite verifier.

Be as it may, when the delegatee shows up for carrying out the in-person transaction, he/she provides the delegatee unique identifier, and the onsite verifier captures on-live (e.g., picture or video frame) his/her biometrics to be matched against the original data sent by the delegator. If verification succeeds, the verifier grants the delegatee to perform the in-person service.

In a particular embodiment, the biometrics data can be in any type of biometrics modality that the delegatee can safely transfer (to delegator or to third party entity) and the verifier can securely capture such as face picture, (contact or contactless) finger-/palm-print (picture or template minutia), iris, voice, etc. or a combination of them (i.e., multi-modal biometrics). In a preferred embodiment, the delegatee biometrics comprised in the message is at least the delegatee portrait, so that the verifier captures a face picture and performs a face matching therewith.

The invention also envisages that, additionally or alternatively to the portrait, the delegatee can use his/her finger-/palm-print. The fingerprint (or a template thereof) can be stored in his/her elD card or passport, or be conveniently taken at a distance with his/her mobile phone camera as per the current development of this contactless fingerprint technology. In this term, the verifier can use a reader equipped with a contact-fingerprint scanner, face-capture camera, iris-capture camera, etc. or a combination thereof such as an airport/police-grade kiosk. Alternatively, users can be enrolled in the delegation service using devices solely equipped with contact fingerprint readers as the ones used by verifiers afterwards.

In a particular embodiment, the message sent by the delegator further comprises a passcode shared with the delegatee in an out-of-band manner. Out-of-band means by using a different support than the one used to communicate with the third party entity. That is, if the delegator starts session through internet website or app with the third party entity, the out-of-band channel can be Short Message Service, SMS, email, outloud, call.

Advantageously, when the delegatee shows up, he/she conveys the passcode to the verifier enabling the triggering of the session with the third party in order to retrieve the delegatee's personal information. This passcode is defined preferably at delegator's side (e.g., free text for the delegator) or is provided by the third party (i.e., sort of nonce or one-time-password) that the delegator signs together with the rest of the message. This passcode is also received by the nominated delegatee either straight from the delegator's device or through the third party entity in the form of e.g., Short Message Service, SMS, email, outloud, call, etc.

Upon requesting the delegation of the in-person service by the delegator, the delegated service can have an identifier associated thereto for traceability and identification purposes. Then, this passcode can represent this very same service identifier (and hence be shared with the delegator using e.g., the same out-of-band channel) or, preferably, be additional to it.

In a particular embodiment, the message prepared by the delegator comprises a validity condition timewise, geographically wise and/or usage-wise.

Advantageously, the message can be formatted as a template for the delegator to fill it out. Then, the delegator not only selects the nominated delegatee and inputs the identifier and biometrics (e.g., portrait) but can also specify the terms and conditions about the delegation e.g., "valid for picking up my children *Name Surname* at school *School Z* from *31/10/2024* to *30/11/2024*". Similarly, single- or multi-time in-person services can be defined as necessary.

The invention can be embodied as a service accessible through e.g., web browser or app installed. The delegator can then navigate through e.g., the national postal service website to choose the conditions to e.g., collect a parcel and, among the options, being prompted with choice to entrust the collect or delivery to someone else. The delegation feature can be implemented by the postal service itself (i.e., the third party is hereby the postal service) or by a delegation service provider (i.e., the third party is hereby the delegation service provider). As explained, the delegator fills out a standard template with delegatee's personal information and, optionally, the passcode and terms of use about the delegation, signs the message, and forwards it to the third party entity.

In a particular embodiment, the delegator authenticates to the third party entity by using credentials issued in a federated infrastructure. In a preferred embodiment, the delegator credential are Government-issued credentials in form of an ID card or digital ID wallet e.g., supporting eIDAS specification.

That is, when the biometrics data is face-related, the third party entity supports a sort of "know-your-customer" feature when the delegator is prompted to present his/her ID card and a selfie for face-matching. Alternatively, the delegator can use his/her digital ID - issued by a government or institution - stored in the wallet that supports e.g., elDAS specification.

Alternatively, the users can simply log-in to the application and will be provisioned with the necessary credentials and certificates to e.g., securely contact the third party entity and sign the message with the delegatee's information in a verifiable manner by the third party entity.

In a particular embodiment, the delegator authenticates to the third party entity by using credentials in a decentralized infrastructure such as W3C's Decentralized identifiers or Verifiable Credentials. This is particularly advantageous for international use cases as it enables interoperability among different service providers (beyond national ID infrastructures) and lets users to easily manage their credentials.

It also brings privacy-compliance as the delegator, upon nominating the delegatee, can encrypt the delegatee's biometrics data and unique identifier in the message with a third party public key, and publish in a third party entity database (i.e., Verifiable Data Registry as W3C's Verifiable credentials) or a distributed ledger (i.e., blockchain).

Thus, there may be an immutable distributed ledger (i.e., blockchain network), public or private, accessible by (at least) the delegators and third party entity where the delegators publish the delegated in-person services. As known, this posting or publishing of in-person services are considered as transactions (preferably with its status) and, when a number of transactions happen and are confirmed, they form a chained block (i.e., by using cryptography). Whenever a new transaction happens on the blockchain, a record of that operation is added to participant's ledger and hence the delegator according to the invention receives back the transaction identifier.

This transaction identifier can be used by the delegator as e.g., the passcode handed over to the delegatee or a way for the verifier to retrieve, through the third party entity, the decrypted delegatee's personal information.

In further embodiments of the blockchain use case, after successful verification by the onsite verifier of the delegatee, the status of the published transaction is set to "revoked" to avoid being maliciously re-used.

In a particular embodiment, at least the delegator and the verifier are part of a same infrastructure, storing certificates to authenticate to the third party entity. That is, there is no need that the delegatee be aware of the way used to transfer to him/her the delegator's abilities for carrying out the specific in-person service. This is especially advisable and useful to deal with digital illiteracy, senior people, or low-resource people.

Certificates typically comprises identification data about the certificate owner, public key information, and a digital signature derived from a private key of the certificate authority (CA) verifiable knowing its public key. Thus, it allows to perform certificate-based authentication, and ultimately share securely data packages between the entities.

Therefore, it is considered that (at least) the delegator, the verifier(s), and the third party entity comprises key pairs (private-public keys) and can know (e.g., by accessing certificates) the other entities' public keys to encrypt the messages and, especially, to sign them with their respective private keys to prove authenticity and integrity. While the private keys must be stored securely by each party and be never shared outside, their public keys can be publicly known by all parties to ease secure communication.

As said, the generation or usage of these public-private keys (and any subsequent or necessary key-exchange protocol) may follow specific recommendations of eIDAS-specification, W3C's verifiable credential spec., ISO/IEC 7816-8 spec., Transport Layer Security (TLS), QWAC (Qualified Website Authentication Certificate), etc. according to the specific communication support to be used.

Accordingly, in a particular embodiment, the message sent by the delegator is signed using a delegator's private key and encrypted using a publicly known third party entity's public key.

Having the possible delegatees within the same system (i.e., pre-enrolled) can reduce friction from users as they form part of a delegatee repertory for the delegator to choose the most suitable one.

Additionally, in a particular embodiment, the third party entity comprises, or is configured to access to, a list of one or more delegatees for the delegator to look up and nominate a suitable one according to the envisaged in-person service; the delegator being able to retrieved, online or offline, the delegatee unique identifier and the delegatee biometrics data (e.g., portrait).

In a further embodiment, when delegatee arrives to verifier location (i.e., he/she shows up), the delegatee informs the verifier about the ongoing delegation service for the verifier to trigger a session with the third party entity.

In a second inventive aspect, the present invention provides an infrastructure for a delegator to delegate an in-person service remotely to a delegatee, wherein the infrastructure comprises:
- the delegator configured to
   ∘ nominate the delegatee,
   ∘ prepare a message comprising at least a delegatee unique identifier, and a delegatee biometrics data (e.g., portrait); and
   ∘ authenticate to a third party entity and sends the message to the third party;
- the third party entity configured to authenticate the delegator and an onsite verifier;
- the onsite verifier configured to
   ∘ retrieve the delegatee unique identifier and the delegatee biometrics data (e.g., portrait) from the third party entity,
   ∘ verify the delegatee unique identifier provided in-person by the delegatee,
   ∘ capture a delegatee biometrics data (e.g., face picture), and
   ∘ perform a biometrics (e.g., face) matching with the provided delegatee biometrics data (e.g., portrait);
   ∘ so that, if verification is successful, onsite verifier grants the delegatee to perform the in-person service.

Alike the first inventive aspect, the preferred biometrics modality is face-related. Thus, preferably, the infrastructure comprises:
- the delegator configured to
   ∘ nominate the delegatee,
   ∘ prepare a message comprising at least a delegatee unique identifier, and a delegatee portrait; and
   ∘ authenticate to a third party entity and sends the message to third party;
- a third party entity configured to authenticate the delegator and an onsite verifier;
- the onsite verifier configured to
   ∘ retrieve the delegatee unique identifier and the delegatee portrait from the third party entity,
   ∘ verify the delegatee unique identifier provided in-person by the delegatee,
   ∘ capture a delegatee face picture, and
   ∘ perform a face matching with the delegatee portrait;
   ∘ so that, if verification is successful, onsite verifier grants the delegatee to perform the in-person service.

In a preferred embodiment, the modality of the biometrics data is face, finger-print, palm-print, iris, voice, or a combination thereof.

In a third inventive aspect, the invention provides a system for a delegator to delegate an in-person service remotely to a delegatee, wherein the system comprises:
- the infrastructure according to any of the embodiments of the second inventive aspect; and
- a delegatee remotely entrusted by the delegator to perform an in-person service on its behalf.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: shows a graphic sequence for a delegator to delegate an in-person service remotely to a delegatee according to an embodiment of the invention;
- Fig. 2: illustrates a schematic flowchart for a delegator to delegate an in-person service remotely to a delegatee according to an embodiment of the invention;

### DETAILED DESCRIPTION OF THE INVENTION

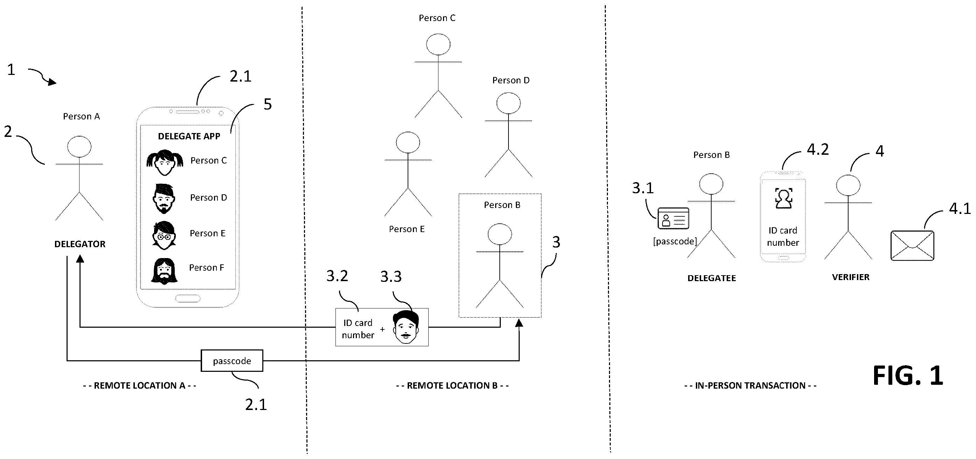

Figure 1 depicts a system 1 for a delegator 2 to delegate an in-person service remotely to a delegatee 3. The system comprises delegatee 3 and an infrastructure with the delegator 2, a third party provider 5, and an onsite verifier 4. Throughout this examples, the in-person service is collecting a letter 4.1 from a post office.

The delegator 2 is e.g., notified that he/she needs to collect the letter 4.1 in person and, knowing he/she is not available, decides to nominate someone else to do it on his/her behalf. The delegator can use a portable device 2.1 (e.g., smartphone, laptop, PC) and connect to the postal service (i.e., service provider 5) through web browser or via an installed app. Throughout these examples, for simplification purposes, it is to be considered that the third party entity is not the service provider offering the in-person service but a service provider 5 offering delegation services.

After logging-in, he/she 2 tracks the letter (e.g., through some identifier or simply by clicking on a provided link) and browses some pick up conditions. Among the options, he/she 2 chooses to entrust the collect to someone else (user become delegator). Delegator 2 is then re-directed to delegation service provider 5 which may also log-in the delegator thanks to previous session with postal service (e.g., single-sign-on) or requires re-authentication by the user. The user should be enrolled having transmitted the necessary personal details and, preferably, during enrollment, he/she 2 should present Government-issued credentials such as ID card, passport, elDAS-compliant digital ID, etc. Other type of digital credentials stored in the device wallet such as verifiable credentials can be envisaged. More preferably, the delegation service provider 5 may allow different types of credentials to be chosen according to the desired delegated service.

Once authenticated to the delegation service provider 5, it displays different options for delegation: persons (Person C, Person D, Person E, Person F) pre-enrolled in the delegation service (e.g., offering suitable delegation services and, opt., associated professional fees) and new persons (Person B) to be uploaded by the delegator. These newly added persons do not enter into the repository of delegatees by default.

The enrolled potential delegatees have already uploaded their biometrics data (e.g., portraits) or, more likely, provided contact details for the delegator to start conversations (e.g., direct message feature in app or via other mutual application, phone call, etc.) and request ad-hoc their unique identifiers and updated biometrics data (e.g., portrait). In case some of the potential delegatees are enrolled and have uploaded their biometrics data (e.g., portraits), the unique identifiers can be, for instance, their account identifier so that the service is even more user-friendly. Throughout these examples, for exemplifying reasons, the biometrics data are in the facial modality, which brings user-convenience and helps with technology adoption. In case the biometrics data are non-facial, e.g., fingerprint-related or iris-related, the delegator might not access these data in plain, but simply attach their encrypted forms to the message before being signed and sent to the third party entity.

The delegation service may also partially pre-fill a template with the information coming from the postal service application or render the complete template blank. The delegator 2 is able to verify delegation conditions and provide further restrictions to the delegation (e.g., timewise, specific purpose, geographically wise).

In the present example, the delegator 2 chooses to add a new person, person B 3, who can be in another remote location. Person B, now "delegatee", provides his/her unique identifier 3.2 (e.g., national ID card 3.1 number, passport number, DID) and his/her portrait 3.3. The delegator inputs these pieces of information on the template, signs the data payload with his private key (e.g., eIDAS-compliant wallet or account provisioned keys), and sends the message over to backend services of the third party entity (not shown). In particular, applications and the backend infrastructure may communicate via one or more Application Program Interfaces, APIs, using Hypertext Transfer Protocol Secure (HTTPS) over Transport Layer Security (TLS).

Optionally, the delegator can also generate a passcode 2.1 that may act as delegation service identifier or as a further authenticator factor for the nominated delegatee 3 to strongly authenticate with the onsite verifier 4. The delegator 2, or through the delegation service 5, shares this passcode 2.1 with the nominated delegatee 3.

To perform the in-person service, the postal service has an onsite verifier 4 configured to authenticate to the delegation service and retrieve the signed template from the delegator. To minimize privacy concerns, the delegatee communicates the passcode 2.1 to the verifier 4 allowing him/her to access the signed template with, inter alia, the delegatee unique identifier 3.2 and delegatee portrait 3.3.

The delegatee 3 now needs to identify him/herself by providing the delegatee unique identifier 3.2. In this example, the delegatee simply shows his/her national ID card 3.1, and if verified, the onsite verifier captures on-live a picture of his/her face to be matched against the original portrait sent by the delegator. If verification succeeds, the verifier grants the delegatee to perform the in-person service, e.g., delivers the letter 4.1. The verifier can provide a receipt to the delegatee, and send an acknowledgment to the delegation service to be forwarded to the delegator in order to inform of a successful in-person transaction.

The onsite verifier according to this invention can be either a cashier using a handset device 4.2 or a self-service machine. The handset device or the self-service machine are both configured to retrieve the signed template from the delegation service and are camera-equipped to capture pictures. The face matching can occur at an embedded module or, more preferably, by contacting with a backend service. In a particular embodiment, the delegation entity does not push the delegatee portrait 3.3 to the verifier's end but, instead, it is the verifier which sends the just captured image for the delegation service, or another entrusted entity, to perform the face matching and send back the result.

In some embodiments, when the delegatee 3 was enrolled in the delegation system, the handing over of the passcode 2.1 to the verifier 4 may happen transparently to the user by launching the app, initiating the transaction, and optionally physically approaching the verifier.

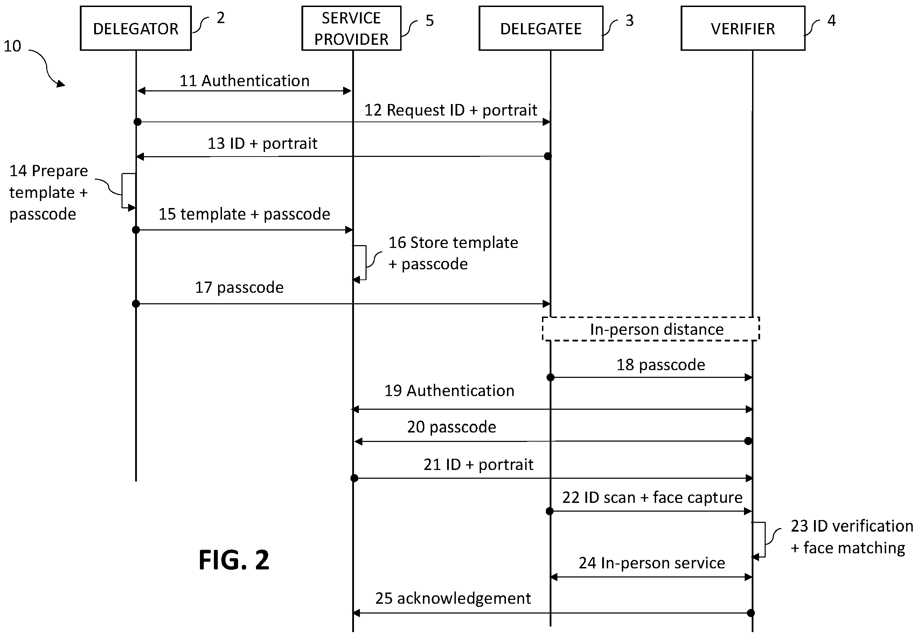

**Figure 2** depicts a schematic flowchart 10 for the delegator 2 to delegate the in-person service remotely to the delegatee 2.

In short, the delegator 2 authenticates 11 to the (delegation) service provider 5 (i.e., third party entity) by using e.g., elD card, VC, or other kind of credentials; and requests 12 the delegatee his/her unique identifier and a (updated) portrait. Similarly, as explained, the delegator may get these pieces of information from other sources such as enrolled user profiles.

The delegatee returns 13 the requested personal information and the delegator fills in and sign 14 a template with the conditions (e.g., validity, purpose) of the delegation. Together with this template, the delegator may send 15 a passcode enabling accessing the template, and the service provider stores both 16. The delegator, either directly or through the service provider, forwards 17 this passcode to the nominated delegatee in an out-of-band manner (e.g., SMS).

When the delegatee shows up, he/she engages with the onsite verifier and provides 18 the passcode. The delegatee can also indicate, optionally, that he/she is representing the delegator for the verifier to trigger a special workflow and, especially, it needs to authenticate to and contact 19 the service provider (i.e., trigger session with service provider). The verifier can identity the delegated transaction either through the passcode 20 or through delegatee's unique identifier (or both).

After successful authentication of the verifier and delegated transaction, the verifier gets 21 the delegatee's unique identifier and submitted portrait.

The verifier then gets 22 the delegatee unique identifier (e.g., scans the elD card) and captures the face of the delegatee. It verifies 23 whether the provided identifier matches the one forwarded by the service provider and performs (either in-situ or using a backend service) face matching between the just captured picture and the provided portrait.

If all verifications are successful, then the verifier and delegatee carry out 24 the in-person transaction. Optionally, the verifier sends an acknowledgment 25 to the service provider in order to e.g., set the status of the pending transaction as "performed" and, further, to inform the delegator about the successful in-person transaction.

## Claims

1. A method (10) for a delegator (2) to delegate an in-person service remotely to a delegatee (3), wherein the method comprises the steps of:
- the delegator nominates the delegatee and prepares a message (14) comprising at least a delegatee unique identifier (3.2), and a delegatee biometrics data (3.3);
- the delegator authenticates (11) to a third party entity (5) and sends (15) the message to the third party entity;
- an onsite verifier (4)
∘ retrieves (21) the delegatee unique identifier and the delegatee biometrics data from the third party entity,
∘ verifies (23) the delegatee unique identifier provided in-person by the delegatee, captures a delegatee biometrics data, and performs a biometrics matching with the retrieved delegatee biometrics data;
- if verification is successful, onsite verifier grants (24) the delegatee to perform the in-person service.

2. The method according to claim 1, wherein the message prepared by the delegator comprises a validity period timewise, geographically wise and/or usage-wise.

3. The method according to any of claims 1 or 2, wherein the delegator authenticates to the third party entity by using credentials issued in a federated infrastructure.

4. The method according to claim 3, wherein the delegator credential are Government-issued credentials in form of an ID card or digital ID wallet supporting eIDAS specification.

5. The method according to any of claims 1 or 2, wherein the delegator authenticates to the third party entity by using credentials in a decentralized infrastructure such as W3C's Decentralized identifiers or Verifiable Credentials.

6. The method according to any of claims 1 to 5, wherein the message sent by the delegator further comprises a passcode shared with the delegatee in an out-of-band manner.

7. The method according to any of claims 1 to 6, wherein at least the delegator and the verifier are part of a same infrastructure, storing certificates to authenticate to the third party entity.

8. The method according to claim 7, wherein the message sent by the delegator is signed using a delegator's private key and encrypted using a publicly known third party entity's public key.

9. The method according to any of claims 1 to 8, wherein the third party entity comprises, or is configured to access to, a list of one or more delegatees for the delegator to look up and nominate a suitable one according to the envisaged in-person service; the delegator being able to retrieved, online or offline, the delegatee unique identifier and the delegatee biometrics data.

10. The method according to any of claims 1 to 9, wherein the modality of the biometrics data is face, finger-print, palm-print, iris, voice, or a combination thereof.

11. The method according to any of claims 1 to 10, wherein when delegatee arrives to verifier location, delegatee informs the verifier about the ongoing delegation service for the verifier to trigger a session with the third party entity.

12. An infrastructure for a delegator to delegate an in-person service remotely to a delegatee, wherein the system comprises:
- the delegator configured to
∘ nominate the delegatee,
∘ prepare a message comprising at least a delegatee unique identifier, and a delegatee biometrics data; and
∘ authenticate to a third party entity and sends the message to the third party entity;
- the third party entity configured to authenticate the delegator and an onsite verifier;
- the onsite verifier configured to
∘ retrieve the delegatee unique identifier and the delegatee portrait from the third party entity,
∘ verify the delegatee unique identifier provided in-person by the delegatee,
∘ capture a delegatee biometrics data, and
∘ perform a biometrics matching with the delegatee portrait;
∘ so that, if verification is successful, onsite verifier grants the delegatee to perform the in-person service.

13. The infrastructure according to claim 12, wherein the modality of the biometrics data is face, finger-print, palm-print, iris, voice, or a combination thereof.

14. A system (1) for a delegator to delegate an in-person service remotely to a delegatee, wherein the system comprises:
- the infrastructure according to claim 12; and
- a delegatee remotely entrusted by the delegator to perform an in-person service on its behalf.
